# EUROPEAN PATENT APPLICATION

(11) **EP 4 654 056 A1**
(43) Date of publication of application: **26.11.2025**
(21) Application number: 24177365.4
(22) Date of filing: 22.05.2024
(51) Int. Cl.: G06F 21/55, H04L 9/40, H04W 4/48

(54) **ELECTRONIC CONTROL UNIT, APPARATUS, COMPUTER-READABLE DATA CARRIER, COMPUTER PROGRAM, AND METHOD FOR INTRUSION DETECTION**

(71) Applicant: AUMOVIO Autonomous Mobility Germany GmbH, 85057 Ingolstadt (DE)
(72) Inventor: Reddy, P Yogeswar, 560100 Bangalore (IN)
(74) Representative: Aumovio Corporation

(57) **Abstract**

Embodiments of the present disclosure relate to an electronic control unit, an apparatus, a computer-readable data carrier, a computer program, and a method for intrusion detection. The method comprises obtaining a parameter indicating whether a debug mode or diagnostic mode of an electronic control unit (ECU) of a vehicle has been entered. Further, the proposed method comprises determining, based on the parameter, if an intrusion into the ECU occurred and taking safety and/or security measures based on whether an intrusion occurred.

## Description

Embodiments of the present disclosure relate to an electronic control unit, an apparatus, a computer-readable data carrier, a computer program, and a method for intrusion detection. In particular, but not exclusively, the approach proposed herein relates to a concept for intrusion detection based on a parameter of a communication protocol.

Vehicles are more and more communicatively coupled. For this reason, cybersecurity plays an increasingly important role in automotive applications.

In particular, cybersecurity in vehicles deal with solutions for protection against malicious access and attacks on vehicles. However, even protected systems may be prone to unauthorized access and/or cyber attacks. In some cases, such access or cyber attacks may jeopardize the functional safety of automotive applications. This is particularly critical if safety-critical functions (e.g., assisted/autonomous driving, steer-by-wire, brake-by-wire, and/or the like).

In some scenarios, and attacker may gain access unnoticed so that countermeasures can be only taken once undesired behavior occurs, e.g., when a safety-critical function fails.

Hence, there may be a demand for an improved concept of intrusion detection in automotive applications.

This demand may be satisfied by the subject matter of the appended independent claims. Optional embodiments are disclosed by the appended dependent claims.

Embodiments of the present disclosure provide a method for intrusion detection in vehicles. The method comprises obtaining a parameter indicating whether a debug mode or diagnostic mode of an electronic control unit (ECU) of a vehicle has been entered. Further, the proposed method comprises determining, based on the parameter, if an intrusion into the ECU occurred and taking safety and/or security measures based on whether an intrusion occurred.

So, the proposed method allows to detect unauthorized access attempts using the debug mode or diagnostic mode of ECUs. In this way, unauthorized access may be detected both Successful & Unsuccessful attempts (immediately) when it happens so that countermeasures may be taken before any undesired behavior occurs. In practice, this may particularly increase the reliability of safety/security-critical functions.

The method may further comprise obtaining information on an operational state of the vehicle and taking safety and/or security measures based on the information on the operational state. In this way, suitable measures may be taken for different operational states. In practice, e.g., other measures may be taken if the vehicle is in an idle operational state that if the vehicle was turned on and/or moving.

Specifically, the measures may include preventing the vehicle from starting its engine if the information on the operational state indicates that the vehicle is idle.

Alternatively, the measures may include bringing the vehicle into a safe state if the information on the operational state indicates that the vehicle is in operation and/or moving.

In this way, appropriate measures may be taken in consideration of the operational state. In doing so, the safety (for users and/or traffic participants) & security of the product may be further increased.

Alternatively or additionally, the measures may include providing a notification to a user of the vehicle. A skilled person having benefit from the present disclosure will appreciate, that the notification may include one or more and/or different types of notifications (perceivable by a human). In practice, the notification, e.g., includes a tactile, visible, audible, and/or a readable notification or a combination thereof.

In practice, the notification may indicate whether an intrusion occurred and/or, if an intrusion occurred, information on the intrusion. The notification, e.g., notifies the user that an unauthorized entity tried to access the ECU and/or whether such access attempt was successful or unsuccessful.

This allows the user to react to such unauthorized access attempt, e.g., by reporting it to a maintenance authority, a service provider, a vehicle manufacturer, a backend, a law enforcement agency, and/or any other party of interest.

In some embodiments, the notification is provided to a mobile device of the user and/or via a human-machine-interface of the vehicle. The human-machine-interface, e.g., corresponds to or comprises a display/screen, one or more speaker, and/or one or more vibrating motors. In practice, the human-machine-interface, for example, corresponds to or comprises an infotainment system or a component thereof for communication between the vehicle and the user. However, also other human-machine-interfaces may be applied.

Providing the notification (with information about a location of the vehicle (part of mobile alert) & time/date of the access attempt once Security access gained successful/unsuccessful scenario) to the mobile device allows the user to gain knowledge of an unauthorized access attempt from remote, e.g., if the user is not in or at the car, whereas notifying the user via the human-machine-interface allows to re-use of resources.

In practice, the parameter used for the proposed intrusion detection may be a parameter of a (standardized) communication protocol (for automotive applications). So, the parameter may comprise obtaining the parameter from an automotive communication protocol. In context of the present disclosure, the term "automotive communication protocol" is to be understood broadly. So, examples of the automotive communication protocol may include any type of communication protocol which may be used in automotive applications.

The communication protocol, e.g., corresponds to or complies with a Joint Test Action Group standard, a Unified Diagnostic Services standard, a Universal Measurement and Calibration Protocol, a Bluetooth standard, Ethernet standard, and/or a Wifi standard.

The skilled person having benefit from the present disclosure will appreciate that even though the present disclosure may relate only to a limited number of communication protocols, the proposed approach may be applied to any kind of communication protocol supporting a debug mode or diagnostic mode.

Further embodiments provide a computer program comprising instructions which, when the computer program is executed by a computer, cause the computer to carry out an embodiment of the proposed method.

Further embodiments provide a computer-readable data carrier having stored thereon said computer program.

Still further embodiments provide an apparatus comprising one or more interfaces for communication and a data processing circuit configured to execute an embodiment of the proposed method.

The skilled person will appreciate that the proposed approach may be implemented in an electronic control unit (ECU) for a vehicle.

Accordingly, further embodiments of the present disclosure provide an ECU comprising an embodiment of the proposed apparatus.

It is noted that the term "electronic control unit" and "ECU" is to be understood broadly in context of the present disclosure. So, "electronic control unit/ECU" may include or correspond to any type of programmable hardware for a vehicle. In particular, the electronic control unit/ECU may be any kind thereof, e.g., a door control unit (DCU), engine control unit, electric power steering control unit (PSCU), human-machine interface (HMI), powertrain control module (PCM), speed control unit (SCU), telemetric control unit (TCU), transmission control module (TCM), brake control module (BCM), a battery management system (BMS), and/or a combination thereof.

Further, embodiments are now described with reference to the attached drawings. It should be noted that the embodiments illustrated by the referenced drawings show merely optional embodiments as an example and that the scope of the present disclosure is by no means limited to the embodiments presented:

### Brief description of the drawings

Fig. 1 shows a flow chart schematically illustrating an embodiment of a method for intrusion detection in vehicles;
Fig. 2 shows a flow chart schematically illustrating an application of the proposed approach for an in-person attack;
Fig. 3 shows a flow chart schematically illustrating an application of the proposed approach for an online attack;
Fig. 4 shows a block diagram schematically illustrating state-dependent measures if an intrusion is detected;
Fig. 5 exemplarily shows a configuration for the JTAG protocol; and
Fig. 6 shows a block diagram schematically illustrating an embodiment of an apparatus according to the proposed approach.

As outlined above, cybersecurity plays an important role in vehicles, not only for data protection, but also for safety reasons. However, particularly in vehicles, it may be too late to react to unauthorized access attempts and/or malicious attacks when they become apparent, e.g., undesired driving behavior. In practice, e.g., a user (e.g., a vehicle owner) may not know of an intrusion until some undesired behavior occurs or damage happens to the product or specific ECU. This, e.g., may happen if a malicious attack occurred but the hacker or attacker is not damaging the system/product immediately and waits the right time to manipulate the vehicle. So, the user may think that vehicle is in his/her control only but actually it is not. So, it is one objective of the present disclosure to provide a solution which allows to detect unauthorized access attempts when they happen.

Embodiments of the present disclosure are based on the finding that a debug and diagnostic functions of ECUs may be used to introduce malicious software and/or configuration/software modifications. A basic idea of the proposed solution for intrusion detection is, therefore, to observe whether the debug mode or diagnostic mode has been entered (and not left afterwards).

The debug mode or diagnostic mode may be any kind of mode which allows modification of software of the ECU. E.g., the debug mode or diagnostic mode allows flashing or updating the software and/or adjusting (operational) parameters of the ECU.

So, the debug mode or diagnostic mode may be entered by developers and/or service stations to fix software bugs, update the ECU's software, and/or adjust operational parameters (e.g., thresholds or actuator/sensor settings). Thus, the debug mode or diagnostic mode may have an influence on safety-critical functions. For example, settings may be changed such that a steer-buy-wire system fails. For this reason, the debug mode or diagnostic mode may be protected by any kind of authentication mechanism, e.g., a password-based authentication. Still, attackers may be able to enter the debug mode or diagnostic mode for malicious attacks.

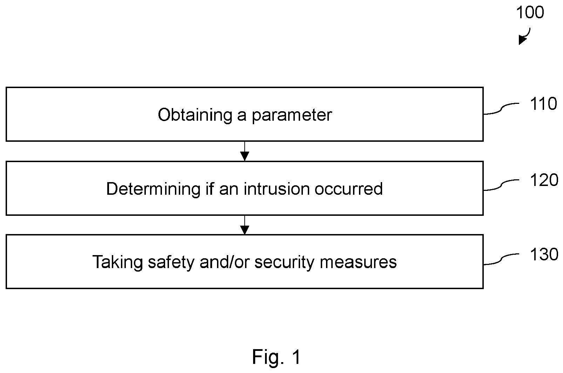

Further features and aspects of embodiments of the proposed approach are described below in more detail with reference to Fig. 1.

Shows a flow chart schematically illustrating an embodiment of a method 100 for intrusion detection in vehicles.

As can be seen from the flowchart, method 100 may include multiple steps. However, in practice, the steps may be implemented in the same and/or in different processes. So, the steps may be executed step by step, in certain combinations, and/or altogether in the same process.

Method 100 comprises obtaining 110 a parameter indicating whether a debug mode or diagnostic mode of an ECU of a vehicle has been entered.

As the skilled person understands, ECUs may exhibit such parameter which changes when the debug mode or diagnostic mode has been entered. In practice, such parameter is specified by a communication protocol supported by the ECU. The parameter may be of various data types. For example, it may be a floating-point, an integer, a list, an array, a Boolean, and/or any other kind of data type which allows to indicate a state change between at least two different states of the debug mode or diagnostic mode. In the simplest case, the parameter may assume at least two of values, wherein a first value of the parameter indicates that the debug mode/diagnostic mode is active/enabled and a second value of the parameter indicates that the debug mode or diagnostic mode is inactive/disabled. In some embodiments, the parameter may be or include an entry of a communication protocol configuration, as laid out in more detail later.

It is noted that even though examples described herein may only relate to the debug mode, features described in connection with the debug mode may be similarly applicable to the diagnostic mode. So, explanations referring to the debug mode may be equally valid for the diagnostic mode.

The method further 100 comprises determining 120, based on the parameter, if an intrusion into the ECU occurred. For this, it may be determined, e.g., if the value of the parameter indicates whether the debug mode is active/enabled. For example, if the parameter corresponds to the first value it is assumed that the debug mode is active/enabled.

In embodiments, the parameter (or its value), e.g., is retrieved from the configuration of the communication protocol which may be stored in a memory, e.g., a memory of the ECU.

In context of the present disclosure, intrusion may be any kind of access of the debug mode or diagnostic mode be it authorized or unauthorized. In some embodiments, the method may suggest distinguishing between authorized access (e.g., for service purposes) and unauthorized access of the debug mode. To this end, an antivirus or intrusion detector may be applied which may be configured to identify anomalies and/or malicious software. For this, it may be determined if the debug mode is disabled again after enabling the debug mode within a predefined time period after enabling/accessing the debug mode. Alternatively or additionally, the method may distinguish between authorized and unauthorized access based on a plausibility or trustworthiness of software (modifications) which are applied in the debug mode.

Further, method 100 suggests taking safety and/or security measures based on whether an intrusion occurred.

Exemplary safety/security measures may include one or more actions to bring the vehicle in a safe state and/or provide safety to passengers. For example, safety measures may include stopping the vehicle if it is moving, prevent the vehicle from starting and/or moving if it is not moving/running, activate one or more safety functionalities (e.g., brakes, airbags, driver assistance, lights, pedestrian safety systems, and/or the like) which may have been switched off/deactivated through unauthorized access to the debug mode or diagnostic mode.

Alternatively or additionally, security measures may be taken. Such security measures may include any action for restoring and/or providing the cyber security of the ECU in response to the access of the debug mode or diagnostic mode. In practice, such security measures, e.g., comprise data protection mechanisms and/or restriction of access rights (e.g., writing and/or read access rights).

In conclusion, embodiments of the present disclosure may include detection, notifying, and acting for protection against cyber-attacks. Applications of the proposed approach may be therefore referred to as "Sec-DNA" (Sec = security, D = detection, N = Notifying, A = Acting).

In this way, the security and/or safety of the vehicle may be improved, provided and/or restored (immediately) in response to a detected intrusion before any undesired behavior occurs. In this way, more safety and/or security may be provided compared to other approaches.

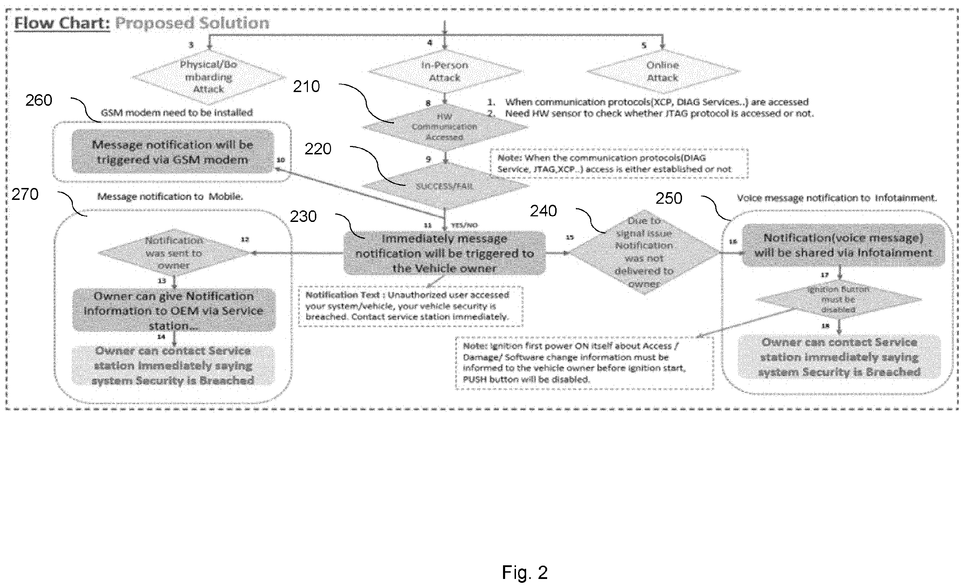

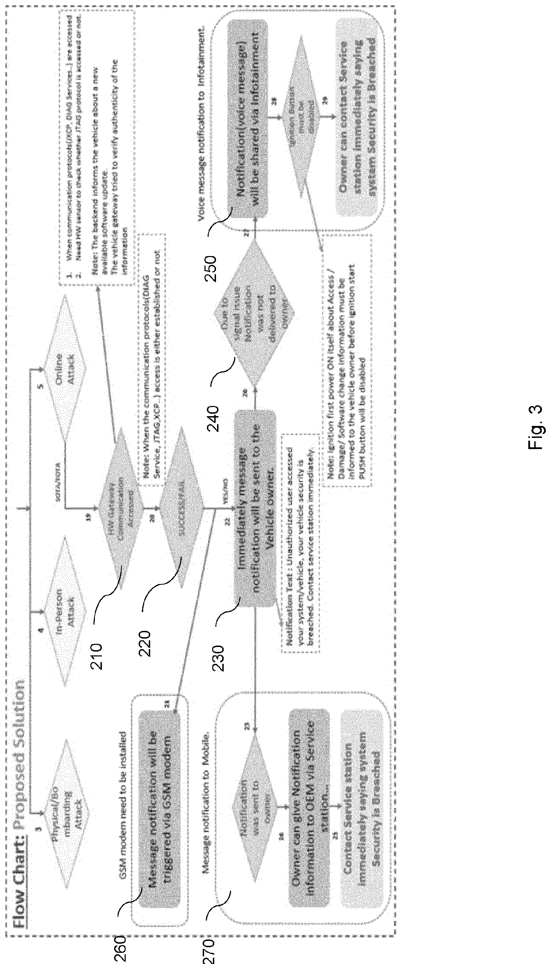

Further aspects and details are now described below with reference to Figs. 2 and 3 illustrating an application of the proposed approach for different attack scenarios.

As can be seen from the flow chart of Fig. 2, different attack scenarios including a physical/bombarding attack, an in-person attack, and an online attack may be possible.

Fig. 2 primarily deals with the application of the proposed approach in case of an in-person attack, e.g., if an attacker connects with any wired interface of the vehicle or ECU.

In this case, a hardware communication is accessed to check if a communication protocol is accessed (see step 210). To this end, a hardware sensor may be used to check whether the communication protocol (particularly the debug mode or diagnostic mode supported by the communication protocol) an access attempt occurred or not.

In a further step 220, it is checked if the access attempt was successful or not. In practice, any protection mechanism (e.g., password- or credential based, cryptographic protection, and/or the like) may be applied to protect the communication protocol configuration from unauthorized access. If the protection mechanism is overcome, the access attempt was successful. Otherwise, the access attempt was unsuccessful. To check, if the attempt was successful, e.g., it is observed if the communication protocol configuration changed (e.g., if any parameter, particularly the parameter indicative of the state of the debug mode, has been changed). If so, it is assumed that the access attempt was successful. Otherwise, it is assumed that the access attempt was not successful.

In a next step 230, a user (e.g., a vehicle user/owner) may be notified of the access attempt and if it was successful or not successful. For this, different options may be available.

As can be seen from the flow chart of Fig. 2, the options may include notifying the user via a mobile device (see step 270) and notifying the user via an infotainment system of the vehicle (see step 250).

First, it may be tried to notify the user via the mobile device (e.g., a mobile phone, tablet, and/or wearable). For this, a corresponding notification about the access attempt could be transmitted from the ECU or vehicle to the mobile device via a mobile and/or a local network, e.g., via the Global System for Mobile Communications (GSM) or via a wireless local area network (WLAN). The user may forward information about the access attempt to the original equipment manufacturer (OEM) and/or to a service station to evaluate the access attempt. The OEM or service station may, then, determine if the security of the ECU been breached and/or if safety and/or security measures need to be taken. For this, the service station or OEM may trigger the security and/or safety measures through communication with the vehicle or ECU.

If communication of the notification to the mobile device fails or is not available (see step 240), the notification may be conveyed to the user via the infotainment system of the vehicle (see step 250). For this, e.g., intra-vehicular communication technology may be applied for communication between the ECU and the infotainment system for the notification.

The user may transmit information on the access attempt to the service station and/or the OEM so that the OEM or service station can evaluate the access attempt and trigger security and/or safety measures if appropriate.

As can be seen from Fig. 3, the method may be applied analogously to online attacks, e.g., if attacker uses update mechanisms (e.g., software over the air, SOTA, or firmware over the air, FOTA) such as in man-in-the-middle attacks.

A skilled person having benefit from the present disclosure will appreciate that the proposed approach allows different safety and/or security measures based on an operational state of the vehicle.

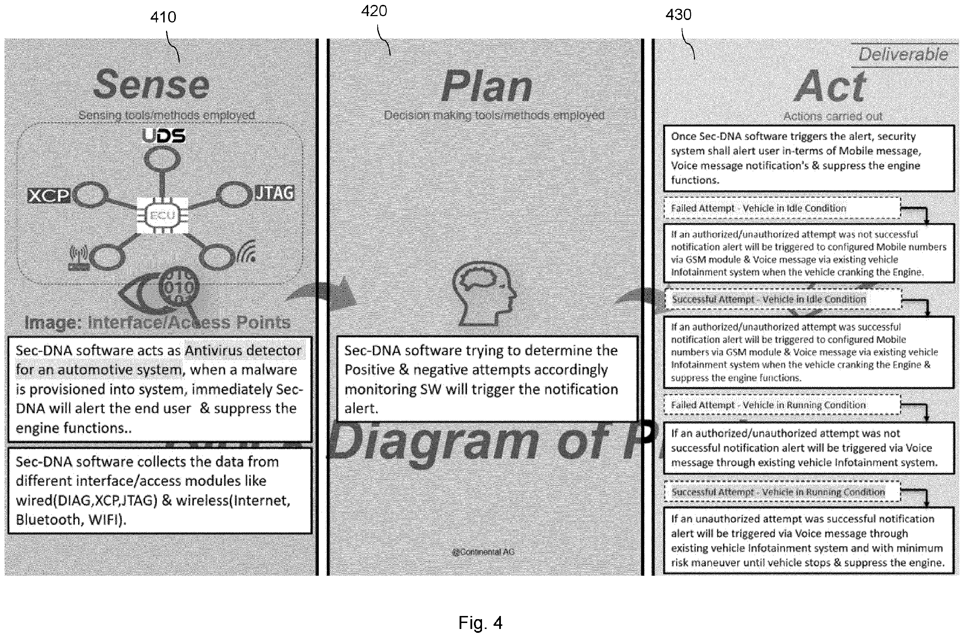

Further details and aspects on such vehicle-state-based security/safety mechanisms are described in more detail below with reference to Fig. 4.

As can be seen from Fig 4, embodiments of the present disclosure may include steps for sensing/detecting (see step 410) intrusion attempts, notification of the user (see step 420), as laid out in more detail above, but also vehicle-state-based countermeasures (see step 430).

For this, the method may further comprise obtaining information on an operational state of the vehicle and taking safety and/or security measures based on the information on the operational state. The information on the operational state, e.g., indicates whether the vehicle is in an idle state or in operation or moving. So, e.g., the method may suggest different reaction to access attempts based on whether the vehicle is turned on (e.g., if the ignition is turned on) or off and/or whether the vehicle is moving or not.

As illustrated in Fig. 4, different security and/or safety measures may be taken based on the operational state and based on whether the access attempt was successful or not.

So, in particular, one a fourth options to react to an access attempt may be selected based on the operational state and whether the access attempt was successful or not.

In case the access attempt was unsuccessful, and the vehicle is idle (in idle condition), according to a first option, Sec-DNA may trigger the notification via the mobile device and/or the infotainment system when the vehicle is started, e.g., when its engine is started.

In case of a successful access attempt, and if the vehicle is idle, according to a second option, the notification via the mobile device will be triggered, the infotainment system outputs a notification, and/or engine functions may be suppressed, e.g., it is prevented that the engine is started.

If the access attempt was not successful and the vehicle is running, according to a third option, the notification is provided via the infotainment system.

If the access attempt was successful and the vehicle is in operation, according to a fourth option, the notification will be triggered and the vehicle is brought into a safe state, e.g., the vehicle is stopped (with minimum risk maneuvers) and/or engine functions are suppressed.

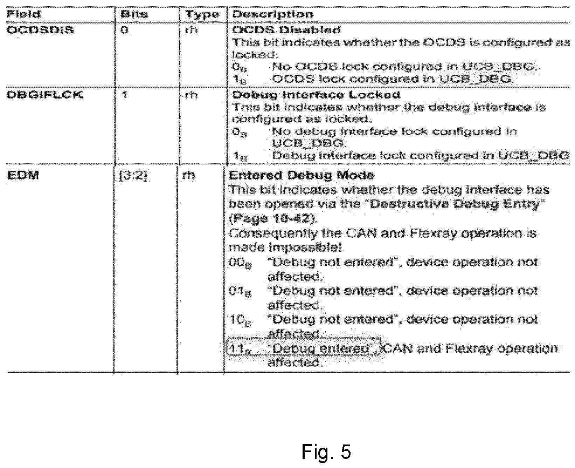

A skilled person having benefit from the present disclosure will appreciate that the proposed approach may be applied for different communication protocols. Exemplarily, an implementation of the proposed approach for a communication protocol according to the Joint Test Action Group (JTAG) standard (also referred to herein as "JTAG protocol") is laid out in more detail below with reference to Fig. 5. However, it is noted, that principles described in connection with the JTAG protocol may be analogously applied in connection with other communication protocols such as communication protocols complying to a Unified Diagnostic Services standard, a Universal Measurement and Calibration Protocol, a Bluetooth standard, Ethernet standard, and/or a Wifi standard.

Fig. 5 shows a table exemplarily illustrating a part of a configuration of the JTAG protocol. Particularly, the table shows different data fields (referred to as "OCDSDIS", "DBGIFLCK", and "EDM" (Entered Debug Mode)) of the configuration. As indicated, the data field EDM may assume different values including "00", "01", "10", "11". If EDM corresponds to "00", "01", "10", the debug mode has not been entered. Otherwise, if EDM corresponds to "11", the debug mode has been entered. So, for checking if the debug mode has been entered, the data field EDM may be retrieved and checked accordingly.

The skilled person will appreciate, that configurations of other communication protocols include similar data fields indicating whether the debug mode or diagnostic mode has been entered and that the proposed approach may be, therefore, applied analogously to other communication protocols.

It is noted that embodiments of the present disclosure may be implemented at least partly as software. So, one, more, or all steps of the proposed approach may be implemented in a computer program.

In practice, embodiments of the proposed method, for example, may be implemented in a computer program comprising instructions such that, when the computer program is executed by a computer, cause the computer to carry out the proposed method.

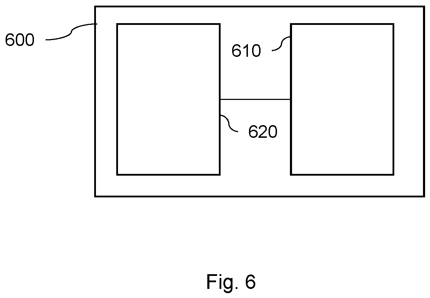

Also, the proposed approach may be implemented in an apparatus, as laid out in more detail below with reference to Fig. 6.

Fig. 6 shows a block diagram schematically illustrating an embodiment of such an apparatus 600. The apparatus comprises one or more interfaces 610 for communication and a data processing circuit 620 configured to execute the proposed method.

In embodiments, the one or more interfaces 610 may comprise wired and/or wireless interfaces for transmitting and/or receiving communication signals in connection with the execution of the proposed concept. In practice, the interfaces, e.g., comprise pins, wires, antennas, and/or the like. As well, the interfaces may comprise means for (analog and/or digital) signal or data processing in connection with the communication, e.g., filters, samples, analog-to-digital converters, signal acquisition and/or reconstruction means as well as signal amplifiers, compressors and/or any encryption/decryption means.

The data processing circuit 620 may correspond to or comprise any type of programable hardware. So, examples of the data processing circuit 620, e.g., comprise a memory, microcontroller, field programable gate arrays, one or more central, and/or graphical processing units. To execute the proposed method, the data processing circuit 620 may be configured to access or retrieve an appropriate computer program for the execution of the proposed method from a memory of the data processing circuit 620 or a separate memory which is communicatively coupled to the data processing circuit 620.

In practice, the proposed apparatus may be installed on a vehicle. So, embodiments may also provide a vehicle comprising the proposed apparatus. In implementations, the apparatus, e.g., is part of or corresponds to an ECU.

However, in implementations, computing resources for the vehicle may be outsourced to an external server separate from the vehicle. In such implementations, the proposed approach may be also implemented outside of the vehicle.

It is noted, that the term "vehicle/s" is to be interpreted broadly in context of the present disclosure. So, vehicles according to the present disclosure may include any kind of vehicle, including various ground vehicles (e.g., car, truck, bus, motorcycle, and/or the like), various watercrafts (e.g., boat), various aircrafts (e.g., planes, helicopters), and/or a combination thereof (e.g., amphibious vehicle).

In the foregoing description, it can be seen that various features are grouped together in examples for the purpose of streamlining the disclosure. This method of disclosure is not to be interpreted as reflecting an intention that the claimed examples require more features than are expressly recited in each claim. Rather, as the following claims reflect, subject matter may lie in less than all features of a single disclosed example. Thus, the following claims are hereby incorporated into the description, where each claim may stand on its own as a separate example. While each claim may stand on its own as a separate example, it is to be noted that, although a dependent claim may refer in the claims to a specific combination with one or more other claims, other examples may also include a combination of the dependent claim with the subject matter of each other dependent claim or a combination of each feature with other dependent or independent claims. Such combinations are proposed herein unless it is stated that a specific combination is not intended. Furthermore, it is intended to include also features of a claim to any other independent claim even if this claim is not directly made dependent to the independent claim.

Although specific embodiments have been illustrated and described herein, it will be appreciated by those of ordinary skill in the art that a variety of alternate and/or equivalent implementations may be substituted for the specific embodiments shown and described without departing from the scope of the present embodiments. This application is intended to cover any adaptations or variations of the specific embodiments discussed herein. Therefore, it is intended that the embodiments be limited only by the claims and the equivalents thereof.

## Claims

1. A method (100) for intrusion detection in vehicles, the method (100) comprising:
obtaining (110) a parameter indicating whether a debug mode or diagnostic mode of an electronic control unit, ECU, of a vehicle has been entered;
determining (120), based on the parameter, if an intrusion into the ECU occurred; and
taking (130) safety and/or security measures based on whether an intrusion occurred.

2. The method (100) of claim 1, wherein the method (100) further comprises obtaining information on an operational state of the vehicle and taking safety and/or security measures based on the information on the operational state.

3. The method (100) of claim 2, wherein the measures include preventing the vehicle from starting its engine if the information on the operational state indicates that the vehicle is idle.

4. The method (100) of claim 2, wherein the measures include bringing the vehicle into a safe state if the information on the operational state indicates that the vehicle is in operation and/or moving.

5. The method (100) of any one of the preceding claims, wherein the measures include providing a notification to a user of the vehicle.

6. The method (100) of claim 5, wherein the notification indicates whether an intrusion occurred and/or, if an intrusion occurred, information on the intrusion.

7. The method (100) of claim 5 or 6, wherein the notification is provided to a mobile device of the user and/or via a human-machine-interface of the vehicle.

8. The method (100) of any one of the preceding claims, wherein obtaining the parameter comprises obtaining the parameter from an automotive communication protocol.

9. The method (100) of claim 8, wherein the communication protocol corresponds to or complies with a Joint Test Action Group standard, a Unified Diagnostic Services standard, a Universal Measurement and Calibration Protocol, a Bluetooth standard, Ethernet standard, and/or a Wifi standard.

10. A computer program comprising instructions which, when the computer program is executed by a computer, cause the computer to carry out the method (100) of any one of the claims 1 to 9.

11. A computer-readable data carrier having stored thereon the computer program of claim 10.

12. An apparatus (600) comprising:
one or more interfaces (610) for communication; and
a data processing circuit (620) configured to execute the method (100) of any one of the claims 1 to 9.

13. An electronic control unit, ECU, for a vehicle, the ECU comprising the apparatus (600) of claim 12.
